# EUROPEAN PATENT SPECIFICATION

(11) **EP 2 090 817 B1**
(45) Date of publication and mention of the grant of the patent: **18.01.2012**
(21) Application number: 09152692.1
(22) Date of filing: 12.02.2009
(51) Int. Cl.: F16L 47/08, F16L 25/00

(54) **Double walled corrugated pipe section with pipe coupling**
Doppelwandiger Wellrohrabschnitt mit Rohrverbindung
Section de tuyau ondulée à double paroi à raccord de tuyau

(30) Priority: 14.02.2008 CA 2621322
(43) Date of publication of application: 19.08.2009
(73) Proprietor: Lupke, Manfred Arno Alfred, Thornhill Ontario L3T 1W6 (CA); Lupke, Stefan A., Thornhill, Ontario L3T 1X6 (CA)
(72) Inventor: Lupke, Manfred Arno Alfred, Thornhill Ontario L3T 1W6 (CA); Lupke, Stefan A., Thornhill, Ontario L3T 1X6 (CA)
(74) Representative: Thum, Bernhard

(56) References cited:
- EP-A1- 1 217 282
- CA-A1- 2 342 360
- DE-U1- 20 205 625
- US-A- 5 996 635
- US-A1- 2004 262 923

## Description

### FIELD OF THE INVENTION

The present invention relates to double wall corrugated pipes and methods for manufacturing of such pipes with coupling components.

### BACKGROUND OF THE INVENTION

Double wall corrugated pipe is typically formed in a moving mold tunnel where two streams of plastic are shaped to form inner and outer walls of the corrugated pipe.
Preferably, the inner wall of the double wall corrugated pipe is of a fixed diameter defining a smooth consistent passageway through the pipe. The outer wall of the pipe is formed with a series of circumferentially extending corrugations to stiffen the pipe and increase the buckling strength thereof.

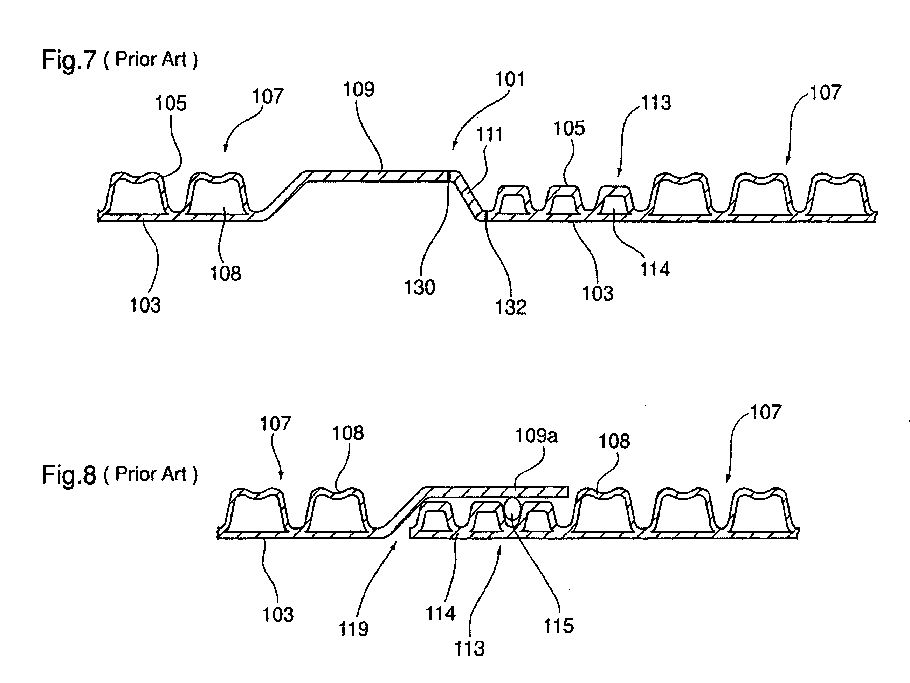

Our previous Canadian Patent 2,342,360 discloses a double wall corrugated pipe that is formed using a continuous moving mold tunnel to form a continuous length of pipe. The integrally molded pipe includes pipe sections with an insert connector and a bell connector separating the pipe sections. With this arrangement the continuous length of pipe produced by the process, is cut into lengths of pipe with each pipe having an insert connector at one end thereof and a bell connector at an opposite end. Preferably the insert connector includes a series of corrugations along its length. The insert connector is sized for receipt within the bell connection. The corrugations of the insert connector portion are preferably smaller than the corrugations of the pipe sections and the bell connector is preferably of a diameter corresponding to the corrugations of the pipe sections. In this way two connected pipe sections form an extended length of pipe where the maximum diameter of the connected pipe is generally constant (See Prior Art Figures 7 and 8).

It has also been known to have the bell connector slightly enlarged for receiving a insert connector with corrugations the same size as the corrugations of the pipe section. With this arrangement the coupling between two pipe sections is of a slightly increased diameter relative to the pipe sections either side of the coupling.

In a continuous length of pipe formed with an insert connector adjacent to a bell connector, there is a short length of the molded pipe that is removed between the insert connector and the bell connector to position the connectors at the end of two lengths of pipe.

With the insert/bell coupling as disclosed in our earlier patent 2,342,360, a seal is provided about an exterior surface of the insert connector or on one of the corrugations associated with the insert connector. The inner wall at the junction of two connected pipe lengths is discontinuous between the end of the insert connector and a transition wall between the pipe section and the bell connector.

It is preferable to include a mechanical type seal between the insert and bell connector as this type of seal is easily completed in the field during installation of the pipe. This type of pipe system is commonly used in association with drainage applications.

It has been found that the outer wall of the corrugations of the insert connector can include a number of gaps or deformations and leakage can occur between a seal provided on the top surface of a corrugation of the insert connector. The shape configuration of the surface that receives the seal varies as a function of the molded plastic and operating parameters of the molding system. It is quite common to have small irregularities in this surface.

US 2004/262923 discloses a pipe assembly having a first pipe section and a second pipe section of which at least one pipe section is provided with a spigot which is provided with outwardly annularly extending projections with flanks. A seal is arranged between two adjacent projections against their flanks. At least those projections between which the seal is arranged are formed as projections of increased wall thickness forming a portion of increased wall thickness and comprising a higher filling ratio than more distantly arranged projections.

US 5,996,635 is directed at a composite pipe having an internal pipe and a corrugated external pipe and a socket formed in one piece with the internal pipe and the external pipe. This socket has a connecting section of substantially cylindrical shape and at least one reinforcing rib formed on the outside of the connecting section, a ≤ 2b applying to the length b of the reinforcing rib in the direction of the central longitudinal axis in relation to its thickness a radial to the central longitudinal axis.

EP 1 217 282 A1 shows a thermoplastic pipe of the type with a double wall structure, specifically a cylindrical smooth inner wall and a corrugated outer wall, which at one of the ends of the pipe is prolonged beyond the inner wall in a smooth area with an appropriate diameter to receive the opposite end of another section of pipe inside, a watertight joint being inserted. Its characteristics arise from the fact that in the said smooth terminal section it incorporates a ring-shaped reinforcement band, which may be made of plastic or metal and which will be variable in both thickness and in its axial measurement, according to the diameter of the pipes to be joined and to the circumferential stiffness of the same.

The present invention seeks to overcome a number of disadvantageous associated with our earlier structure and prior art approaches used to connect double wall corrugated pipe.

### SUMMARY OF THE INVENTION

A corrugated plastic pipe of a double wall construction according to the present invention comprises a continuous inner wall defining a consistent passageway through the pipe and an outer wall forming corrugations connected to the inner wall at an inner edge of each corrugation. The pipe at one end thereof includes a bell connector and at an opposite end includes an insert connector having a series of corrugations and an inner wall corresponding to the inner wall of the pipe. The bell connector includes a transition wall extending from a common junction of the inner and outer walls of the pipe to an outer sleeve sized to receive the insert connector. The insert connector includes a lead corrugation at a free end of the insert connector with a lead wall angled to cooperate and engage a transition segment of a bell connector of a like configured pipe when inserted therein. The inner wall of the insert connector, at the free end, projects in a longitudinal axial direction of the pipe end portion beyond the lead corrugation to form an end portion acting as a connecting transition of the inner walls between two pipes connected with the insert connector of one pipe inserted in the bell connector of the second pipe. The lead wall of the lead corrugation is of a length greater than the lead wall of the following corrugations of the insert connector.

According to an aspect of the invention the end portion of the insert connector is a stub flange.

In a further aspect of the invention the outer sleeve includes a generally smooth inner wall with a series of circumferentially extending ribs on an exterior surface of the outer sleeve.

In a further aspect of the invention, an exterior surface of the transition segment includes a series of ribs extending circumferentially about the transition segment.

In yet a further aspect of the invention, the outer sleeve between a free end and the transition segment is of a single wall thickness.

In yet a further aspect of the invention, the free end of the outer sleeve is shaped to receive an insert connector of a like-configured pipe.

In yet a further aspect of the invention, the free end of the outer sleeve includes an outwardly flared interior wall providing a lead-in portion for receiving a insert connector.

In yet a further aspect of the invention, the corrugations of the insert connector are of reduced size defining a smaller exterior diameter relative to the exterior diameter of the pipe corrugations.

In a different aspect of the invention, the outer sleeve is of a diameter corresponding to a maximum diameter of the pipe corrugations. With this arrangement the insert connector includes corrugations of a smaller size that are receivable within the outer sleeve.

In yet a further aspect of the invention, the insert connector includes the lead corrugation and at least two intermediate corrugations spaced along the length of the insert connector.

In a further aspect of the invention, an "O" ring seal is provided on the insert connector between the lead corrugation and the intermediate corrugation that is adjacent to the lead corrugation.

In yet a further aspect of the invention, the transition segment is disposed at an angle of approximately 45° relative to a longitudinal axis of the pipe section.

In yet a further aspect of the invention, the stub flange of the insert connector has an angle end-face parallel to an inner surface of the transition segment whereby the stub flange can abut with the inner surface along the angled end-face. With this arrangement the inner wall at the junction of two connected pipe sections is generally continuous.

### BRIEF DESCRIPTION OF THE DRAWINGS

Preferred embodiments of the invention are shown in the drawings wherein:
Figure 1 is a partial sectional view through a length of double wall corrugated pipe product with a bell connector and an insert connector prior to the pipe section being cut into lengths of pipe;
Figure 2 is a partial cross-sectional view showing the coupling of two lengths of pipe using the insert connector and a bell connector;
Figure 2A is a partial cross-sectional view through the connection between the bell connector and the insert connector where the corrugations of the insert connector are of the same diameter as the corrugations of the pipe and the bell connector is of slightly greater diameter;
Figure 3 is a partial cross-sectional view of the insert/bell connection and an "O" ring provided between a lead corrugation and an intermediate corrugation of the insert connector;
Figure 3A shows a connection of the bell connector and the insert connector where the insert connector is of reduced diameter and a seal is provided on a surface of one of the corrugations of the insert connector;
Figure 4 is a partial sectional view showing details of an outer sleeve of the bell connector;
Figure 5 shows a series of pipe corrugations of different shapes;
Figure 6 is a partial sectional view through a mold block showing the adaption of the mold block to define a transition segment used to form the insert connector;
Figure 7 is a partial sectional view of a prior art length of double wall corrugated pipe prior to the pipe being cut to length; and
Figure 8 is a partial cross section of the prior art pipe of Figure 7 showing the coupling of two lengths of pipe.

### DETAILED DESCRIPTION OF THE PREFERRED EMBODIMENTS

Figure 7 shows a prior art pipe wall construction generally indicated at 101. This pipe wall construction is formed from a common source of plastic separated into different streams through an extrusion process as is known in the art.

The wall construction comprises an inner pipe wall 103 formed from the first stream of plastic and an outer pipe wall 105 formed from the second stream of plastic. The inner pipe wall is flat except where the pipe wall is formed with a bowed wall part 109. The outer pipe wall is formed with a series of corrugations except at the bowed wall part 109 where the inner and outer pipe walls conform with one another.

The outer pipe wall 105 is formed into corrugations. However, these corrugations vary in diameter lengthwise of the pipe. Specifically, along major portions 107 of the length of the pipe, the outer wall is formed into corrugations 108 and along minor portions 113 of the length of the pipe, the outer wall is formed into corrugations 114. These minor portions 113 of the pipe wall also include the bowed wall part 109.

The corrugations 108 have a larger diameter than the corrugations 114, the corrugations 114 have a greater wall thickness as both corrugations are made with the same amount of plastic material.

Bowed wall part 109 has a transition area 111 where it meets with the small diameter corrugations 114. The removal of this transition area, defined by cut positions 130 and 132, produces two separate pipe sections. One pipe section includes a bell 109a which has been converted from the bowed wall part 109 through the removal of the transition area 111 of the bowed wall part. This transition region removal also produces a male spigot end wall construction 113 as shown in Figure 8 where the spigot is formed by the small diameter corrugations 114. Figure 8 of the drawings shows that a seal 115 is placed into one of the valleys of the corrugations 114. The bell 109a of the pipe wall section is then slid over the spigot forming corrugations 114 of the pipe wall end of the other pipe section as shown in Figure 8. This produces a sealed coupling of the two pipe ends relative to one another. The increased wall thickness of the spigot forming corrugations makes them strong to maintain the seal in the coupling.

Although the prior art arrangement of Figures 7 and 8 is satisfactory in many applications, the gap 119 forms an interruption band and the inner pipe wall 103 is discontinuous. Also, the shape of the end corrugation 114 is difficult to control as this is the first corrugation formed after the transition area 111 joins the bowed wall part 109 to the first corrugation. Subsequent corrugations 114 tend to be more accurate. This is not the most advantageous arrangement as sealing of the two pipe sections is more difficult.

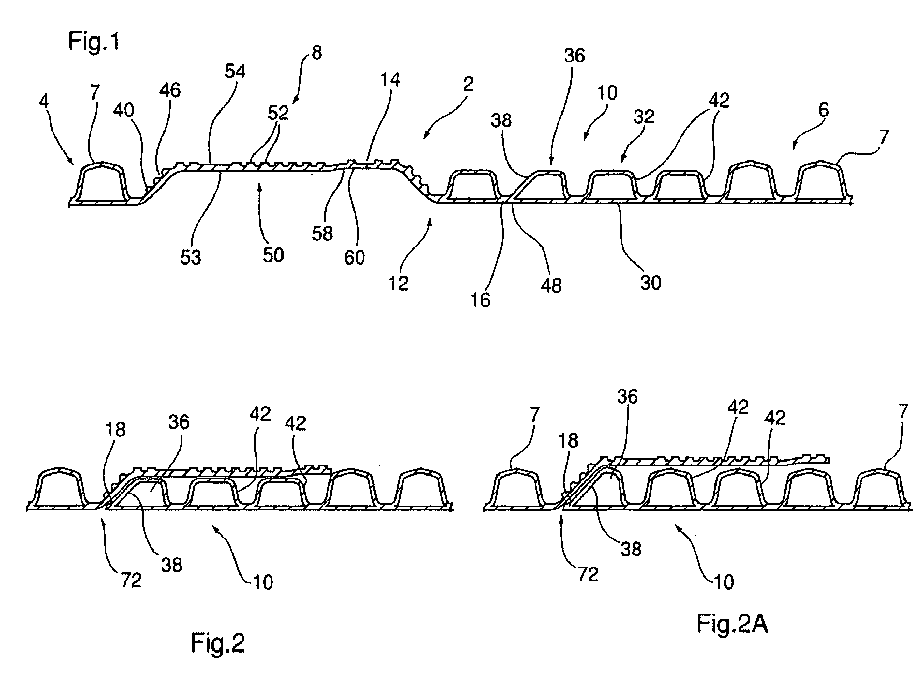

Figure 1 illustrates an improved continuous length of molded pipe product 2 having a first pipe section 4 a second pipe section 6 that are interconnected by the bell connector 8, a scrap or removable section 12 and the male insert connector 10. The continuous molded pipe product is cut at cut line 14 and at the angled cut line 16 to separate the continuous molded pipe product into predetermined lengths of pipe. The angled cut line 16 is provided at a common junction of the inner and outer walls in front of a lead corrugation 36 of the insert connector. This arrangement defines a short stub flange 18.

The insert connector 10 includes an inner wall 30 and an outer corrugated wall 32. The lead corrugation 36 is provided at a free end of the insert connector and preferably includes two associated intermediate corrugations 42.

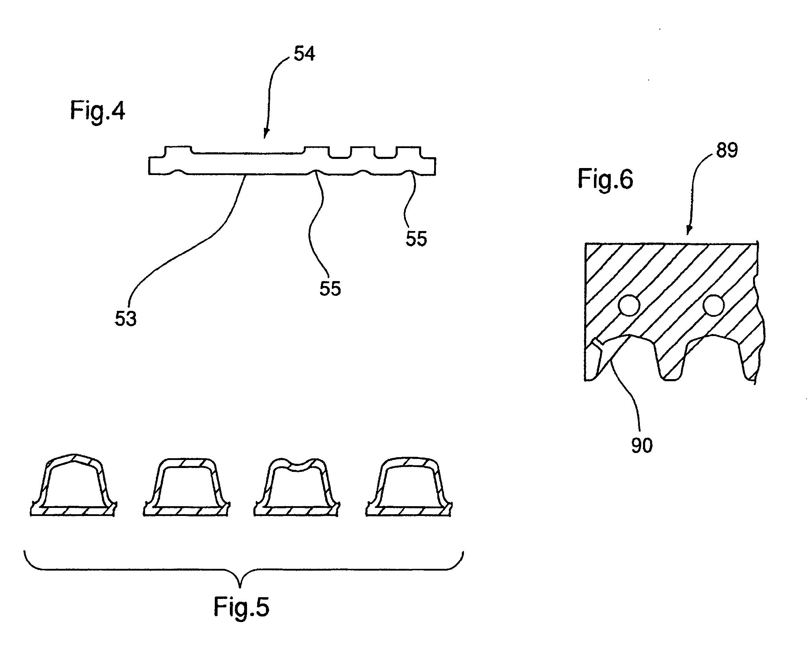

The lead corrugation 36 includes an angled lead wall 38 that generally corresponds with the angled transition segment or wall 46 of the bell connector. The angled transition wall 46 merges with an outer sleeve 50 of the bell connector. The outer sleeve 50 includes exterior ribs 52 provided at different locations along the length of the outer sleeve as well as a non-ribbed seal section 54 that is positioned adjacent a sealing portion on the insert connector. Basically the non-ribbed seal section 54 includes an inner wall 53 which is of more consistent diameter and less subject to undulations 55 (see Figure 4) in the wall which are more commonly associated with the ribbed portion of the outer sleeve 50. Additional details of this are shown in the enlarged sectional view of Figure 4.

The outer sleeve 50 of the bell connector includes a free end 58 that includes an outwardly flared wall 60 that provides a lead-in for receiving the insert connector 10.

The scrap or forming transition section 12 is removed but provides a short forming transition between the outer sleeve 50 of the bell connector 8 and the free end of the insert connector 10 including the stub flange 18 and the lead wall 38 of the lead corrugation 36.

The continuous molded pipe product of Figure 1 has been cut into two lengths of pipe with the insert connector 10 of one pipe inserted in the bell connector 8 of a second pipe. The lead wall 38 of the lead corrugation 36 generally corresponds with the transition wall 46 of the outer sleeve 50. The stub flange 18 of the insert connector cooperates with the bell connector at the base of the transition wall 46 and the last corrugation of the pipe section. As shown at 72 in Figures 2 and 2A, the inner walls of the connected pipes are generally continuous and there is no substantial gap at the junction of the stub flange 18 and the abutment with the transition wall 46. Preferably there is no large gap provided between the inner wall of the lead corrugation and the inner wall of the pipe at the initiation of the bell connector. With this arrangement improved sealing and improved flow through two connected pipe sections is achieved.

In Figures 1 and 2 the lead corrugation 36 and the associated intermediate corrugations 42 are of reduced diameter relative to the conventional pipe corrugations 7. The outer sleeve 50 is of the same diameter as the conventional pipe corrugations 7.

Figure 2A shows a connection where the diameter and shape of the corrugations of the insert connector 10 generally correspond with the diameter and shape of the conventional corrugations 7 of the pipes with the exception that the insert connector includes the specialized lead corrugation 36 for cooperation with the transition wall 46 of the bell connector. The outer sleeve 50 is of slightly increased diameter relative to the maximum diameter of the intermediate corrugations of the pipes.

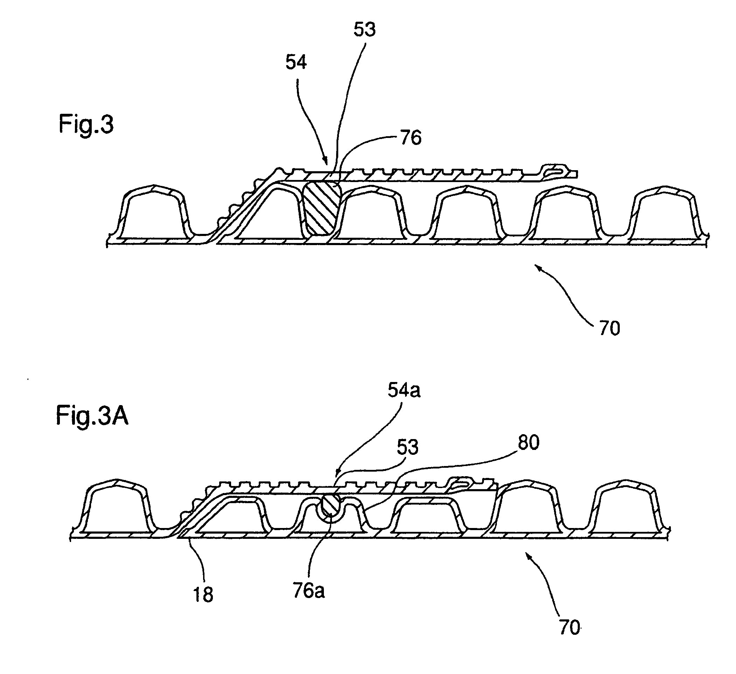

Between the lead corrugation 36 and the first intermediate corrugation following the lead corrugation, an "O" ring seal 76 is preferably inserted as generally shown in Figure 3A. The "O" ring seal 76 has a force fit with the exterior walls of the lead corrugation 36 and the first intermediate corrugation of the insert connector and the seal also engages with the inner wall of the non-ribbed seal section 54 of the outer sleeve 50. This inner wall is generally continuous and is subject to less deformation and therefore a better seal is provided. The additional ribs on the transition wall 46 and on the outer sleeve 50 provide additional strength and reinforcement. These ribs are not provided in the location of the seal.

The lead wall of the lead corrugation is of a length greater than the lead wall of the following corrugations. Preferably the lead wall 38 is at an angle of about 45° whereas the lead wall of other corrugations is much steeper to provide additional stiffness. For example, in Figure 3 the first intermediate corrugation 80 has been deformed on a top surface and has been provided with the "O" ring seal 76a that is seated within this depression of the corrugation. The outer sleeve 50 of the bell connector has the non-ribbed portion 54a positioned to engage the "O" ring seal 76a. This provides improved sealing of the insert connector with the bell connector. As shown, the stub flange 18 is generally in abutment with the inner wall of the first pipe. As previously stated this provides better flow through the connected pipes and also reduces leakage.

Figure 4 shows the details of the ribbing of the outer sleeve and in particular how the non-ribbed portion 54 includes a smoother interior wall. Basically the forming of the ribs requires a vacuum force applied to the plastic to draw the ribs into the mold block. This provides or forms a small deformation on the inner wall. By having the non-ribbed seal portion 54, the inner wall at the seal is smooth and a better seal is achieved.

Figure 5 is a cross-sectional view through a number of different corrugations 89 and is provided to illustrate that the corrugations of both the pipe and the insert connector can be of different shapes.

Figure 6 shows a partial mold block 89 with an insertion piece 90 used to form the transition wall of the bell connector. A similar type insert can be used for forming of the lead corrugation of the insert connector. Such inserts allow a cost effective approach to adapt existing or more common shaped mold blocks.

Although preferred embodiments of the invention have been described herein in detail, it will be understood by those skilled in the art, that variations may be made thereto without departing from the invention or the scope of the appended claims.

## Claims

1. Corrugated plastic pipe (2) of a double wall construction, said pipe (2) comprising
a continuous inner wall (30) defining a consistent passageway through said pipe and an outer wall (32) forming corrugations (7) connected to said inner wall (30) at an inner edge of each corrugation (7);
said pipe (2) at one end thereof including a bell connector (8) and at an opposite end including an insert connector (10) having a series of corrugations (36, 42) and an inner wall corresponding to said inner wall (30) of said pipe (2);
said bell connector (8) including a transition wall (46) extending from a common junction of the inner and outer walls (30, 32) of said pipe (2) to an outer sleeve (50) sized to receive said insert connector (10);
said insert connector (10) including a lead corrugation (36) at a free end (58) of said insert connector (10) with a lead wall (38) angled to cooperate and engage a transition segment of a bell connector of a like configured pipe when inserted therein;
said inner wall (10) of said insert connector, at said free end (58), projecting in a longitudinal axial direction of said pipe end portion beyond said lead corrugation (36) to form an end portion acting as a connecting transition of the inner walls (30) between two pipes connected with the insert connector (10) of one pipe (2) inserted in the bell connector of the second pipe;
**characterized in that** the lead wall (38) of the lead corrugation (36) is of a length greater than the lead wall of the following corrugations of the insert connector (10).

2. Plastic pipe as claimed in claim 1 wherein said end portion is a stub flange.

3. Plastic pipe as claimed in claim 1 wherein said outer sleeve (50) includes a generally smooth inner wall with a series of circumferentially extending ribs (52) on an exterior surface of said outer sleeve (50).

4. Plastic pipe as claimed in claim 1, 2 or 3 wherein an exterior surface of said transition wall (46) includes a series of ribs (40) extending circumferentially about said transition wall (46).

5. Plastic pipe as claimed in claim 3 or 4 wherein said outer sleeve (50) between a free end and said transition segment is of a single wall thickness.

6. Plastic pipe as claimed in claim 5 wherein said free end (58) of said outer sleeve (50) is outwardly shaped to facilitate receipt of an insert connector of a like configured pipe.

7. Plastic pipe as claimed in claim 6 wherein said free end (58) includes an outwardly flared interior wall providing a lead-in for receiving an insert connector.

8. Plastic pipe as claimed in claim 1 wherein said corrugations (42) of said insert connector (10) are of a reduced size defining a smaller exterior diameter relative to the exterior diameter of said pipe corrugations (7).

9. Plastic pipe as claimed in claim 8 wherein said outer sleeve (50) is of an inner diameter corresponding to a maximum diameter of said pipe corrugations (7).

10. Plastic pipe as claimed in claim 1 wherein said insert connector (10) includes said lead corrugation (36) and at least two intermediate corrugations (42) along a length of said insert connector (10).

11. Plastic pipe as claimed in claim 10 including an 'O' ring seal maintained on said insert connector (10) between said lead corrugation (36) and said intermediate corrugation (42) that is adjacent thereto.

12. Plastic pipe as claimed in claim 1 wherein said transition segment is disposed at an angle of approximately 45° relative to a longitudinal axis of said pipe (2).

13. Plastic pipe as claimed in claim 2 wherein said stub flange has an angled end face substantially parallel to an inner surface of said transition segment for abutment therewith along said angled end face.

14. Plastic pipe as claimed in claim 1 wherein said insert connector (10) includes said lead corrugation (36) and at least two following corrugations (42) and said outer sleeve (50) is of length to receive all corrugations (36, 42) of said insert connector (10).

## Patentansprüche

1. Well-Plastikrohr (2) mit einer doppelwandigen Konstruktion, wobei das Rohr (2) aufweist:
eine kontinuierliche innere Wand (30), die eine gleichbleibende Passagenstrecke durch das Rohr definiert, und eine äußere Wand (32), die Wellen (7) ausbildet, die mit der inneren Wand (30) an einer inneren Kante von jeder Welle (7) verbunden sind;
wobei das Rohr (2) an seinem einen Ende einen geweiteten Verbinder (8) aufweist und an einem gegenüberliegenden Ende einen Einführverbinder (10) aufweist, der eine Abfolge von Wellen (36, 42) hat und eine innere Wand, die der inneren Wand (30) des Rohrs (2) entspricht;
wobei der geweitete Verbinder (8) eine Übergangswand (46) aufweist, die sich von einer gemeinsamen Verbindung der inneren und der äußeren Wand (30, 32) des Rohrs (2) zu einer äußeren Muffe (50) erstreckt, die hinsichtlich ihrer Größe so ausgebildet ist, dass sie den Einführverbinder (10) aufnehmen kann;
wobei der Einführverbinder (10) zumindest eine führende Welle (36) an einem freien Ende (58) des Einführverbinders (10) mit einer führenden Wand (38) aufweist, die in einem Winkel steht, um mit einem Übergangssegment eines geweiteten Verbinders eines entsprechend ausgebildeten Rohrs zu kooperieren und zusammenzuwirken, wenn sie darin eingeführt ist;
wobei die innere Wand (10) des Einführverbinders an dem freien Ende (58) in eine longitudinale axiale Richtung des Rohrendbereichs über die führende Welle (36) hinaus hervorsteht, um einen Endabschnitt zu bilden, der als ein verbindender Übergang der inneren Wände (30) zwischen zwei Rohren wirkt, die **dadurch** verbunden sind, indem der Einführverbinder (10) von einem Rohr (2) in den geweiteten Verbinder des zweiten Rohrs eingeführt ist;
**dadurch gekennzeichnet, dass** die führende Wand (38) der führenden Welle (36) eine größere Länge hat als die führende Wand der nachfolgenden Wellen des Einführverbinders (10).

2. Plastikrohr nach Anspruch 1, wobei der Endbereich ein Stutzenflansch ist.

3. Plastikrohr nach Anspruch 1, wobei die äußere Muffe (50) eine im Wesentlichen glatte innere Wand mit einer Abfolge von sich entlang des Umfangs erstreckenden Rippen (52) an einer äußeren Oberfläche der äußeren Muffe (50) aufweist.

4. Plastikrohr nach Anspruch 1, 2 oder 3, wobei eine äußere Oberfläche der Übergangswand (46) eine Folge von Rippen (40) aufweist, die sich entlang des Umfangs über die Übergangswand (46) erstrecken.

5. Plastikrohr nach Anspruch 3 oder 4, wobei die äußere Muffe (50) zwischen einem freien Ende und dem Übergangssegment eine einfache Wandstärke hat.

6. Plastikrohr nach Anspruch 5, wobei das freie Ende (58) der äußeren Muffe (50) nach außen geformt ist, um die Aufnahme eines Einführverbinders von einem entsprechend ausgebildeten Rohr zu vereinfachen.

7. Plastikrohr nach Anspruch 6, wobei das freie Ende (58) eine nach außen gebördelte innere Wand aufweist, die eine Einführung zur Aufnahme eines Einführverbinders bereitstellt.

8. Plastikrohr nach Anspruch 1, wobei die Wellen (42) des Einführverbinders (10) eine reduzierte Größe aufweisen, wodurch ein kleinerer äußerer Durchmesser relativ zu dem äußeren Durchmesser der Rohrwellen (7) definiert ist.

9. Plastikrohr nach Anspruch 8, wobei die äußere Muffe (5) einen inneren Durchmesser hat, der mit einem maximalen Durchmesser der Rohrwellen (7) korrespondiert.

10. Plastikrohr nach Anspruch 1, wobei der Einführverbinder (10) die führende Welle (36) und zumindest zwei Zwischenwellen (42) entlang einer Länge des Einführverbinders (10) aufweist.

11. Plastikrohr nach Anspruch 10, ferner mit einer 'O'-Ring-Dichtung, die auf dem Einführverbinder (10) zwischen der führenden Welle (36) und der daran angrenzenden Zwischenwelle (42) gehalten ist.

12. Plastikrohr nach Anspruch 1, wobei das Übergangssegment in einem Winkel von ungefähr 45° relativ zu einer longitudinalen Achse des Rohrs (2) angeordnet ist.

13. Plastikrohr nach Anspruch 2, wobei der Stutzenflansch eine in einem Winkel stehende Endfläche hat, die im Wesentlichen parallel zu einer inneren Oberfläche des Übergangssegments angeordnet ist, um damit entlang der in einem Winkel stehenden Endfläche in Anlage zu kommen.

14. Plastikrohr nach Anspruch 1, wobei der Einführverbinder (10) die führende Welle (36) und zumindest zwei folgende Wellen (42) aufweist und die äußere Muffe (50) eine Länge hat, um alle Wellen (36, 42) des Einführverbinders (10) aufzunehmen.

## Revendications

1. Tuyau en plastique ondulé (2) dont la construction est à double paroi, ledit tuyau (2) comprenant :
une paroi intérieure continue (30) définissant un passage uniforme à travers ledit tuyau et une paroi extérieure (32) formant des ondulations (7) reliée à ladite paroi intérieure (30) à un bord intérieur de chaque ondulation (7) ;
ledit tuyau (2) comprenant à une extrémité un raccord à manchon (8) et à une extrémité opposée un raccord à insert (10) présentant une série d'ondulations (36, 42) et une paroi intérieure correspondant à ladite paroi intérieure (30) dudit tuyau (2) ;
ledit raccord à manchon (8) comprenant une paroi de transition (46) s'étendant d'un raccord mutuel des parois intérieure et extérieure (30, 32) dudit tuyau (2) à un manchon extérieur (50) dimensionné pour accueillir ledit raccord à insert (10) ;
ledit raccord à insert (10) comprenant une ondulation de tête (36) à une extrémité libre (58) dudit raccord à insert (10) avec une paroi de tête (38) inclinée à un angle pour coopérer et se mettre en engagement avec une section de transition d'un raccord à manchon d'un tuyau présentant une configuration similaire quand celui-ci est inséré dans ledit raccord ;
ladite paroi intérieure (10) dudit raccord à insert s'étendant, à ladite extrémité libre (58), dans une direction axiale, longitudinale, de ladite partie d'extrémité du tuyau au-delà de ladite ondulation de tête (36), de manière à former une partie d'extrémité agissant en tant que transition de raccordement des parois intérieures (30) de deux tuyaux raccordés en insérant le raccord à insert (10) d'un des tuyaux (2) dans le raccord à manchon du deuxième tuyau ;
**caractérisé en ce que** la paroi de tête (38) de l'ondulation de tête (36) à une plus grande longueur que la paroi de tête des ondulations suivantes du raccord à insert (10).

2. Tuyau en plastique selon la revendication 1, dans lequel ladite partie d'extrémité est une bride d'obturation.

3. Tuyau en plastique selon la revendication 1, dans lequel ledit manchon extérieur (50) comprend une paroi intérieure généralement lisse dotée d'une série de nervures s'étendant circonférentiellement (52) sur une surface extérieure dudit manchon extérieur (50).

4. Tuyau en plastique selon la revendication 1, 2 ou 3, dans lequel une surface extérieure de ladite paroi de transition (46) comporte une série de nervures (40) s'étendant circonférentiellement autour de ladite paroi de transition (46).

5. Tuyau en plastique selon les revendications 3 ou 4, dans lequel, entre une extrémité libre et ladite section de transition, ledit manchon extérieur (50) n'a que l'épaisseur d'une seule paroi.

6. Tuyau en plastique selon la revendication 5, dans lequel ladite extrémité libre (58) dudit manchon extérieur (50) est façonnée extérieurement de manière à faciliter l'accueil d'un raccord à insert d'un tuyau présentant une configuration similaire.

7. Tuyau en plastique selon la revendication 6, dans lequel ladite extrémité libre (58) comprend une paroi intérieure évasée vers l'extérieur pour guider l'accueil d'un raccord à insert.

8. Tuyau en plastique selon la revendication 1, dans lequel lesdites ondulations (42) dudit raccord à insert (10) ont une taille réduite définissant un diamètre extérieur plus petit comparé au diamètre extérieur des ondulations dudit tuyau (7).

9. Tuyau en plastique selon la revendication 8, dans lequel ledit manchon extérieur (50) a un diamètre intérieur correspondant à un diamètre extérieur des ondulations dudit tuyau (7).

10. Tuyau en plastique selon la revendication 1, dans lequel ledit raccord à insert (10) comprend ladite ondulation de tête (36) et au moins deux ondulations intermédiaires (42) le long d'une longueur dudit raccord à insert (10).

11. Tuyau en plastique selon la revendication 10 comprenant un joint torique retenu sur ledit raccord à insert (10) entre ladite ondulation de tête (36) et ladite ondulation intermédiaire (42) qui est adjacente à celle-ci.

12. Tuyau en plastique selon la revendication 1, dans lequel ladite section de transition est disposée à un angle d'environ 45° par rapport à l'axe longitudinal dudit tuyau (2).

13. Tuyau en plastique selon la revendication 2, dans lequel ladite bride d'obturation a une face d'extrémité inclinée à un angle sensiblement parallèle à une surface intérieure de ladite section de transition pour la mise en butée de celle-ci contre ladite face d'extrémité inclinée.

14. Tuyau en plastique selon la revendication 1, dans lequel ledit raccord à insert (10) comprend ladite ondulation de tête (36) et au moins deux ondulations suivantes (42) et ledit manchon extérieur (50) a une longueur suffisante pour accueillir toutes les ondulations (36, 42) dudit raccord à insert (10).
